# EUROPEAN PATENT SPECIFICATION

(11) **EP 0 707 170 B1**
(45) Date of publication and mention of the grant of the patent: **15.12.1999**
(21) Application number: 95115696.7
(22) Date of filing: 02.10.1995
(51) Int. Cl.: F16L 23/12

(54) **Securing end fitting to hose**
Befestigen eines Endbundes an einem Schlauch
Fixation d'une collerette à un tuyau souple

(30) Priority: 15.10.1994 GB 9420836
(43) Date of publication of application: 17.04.1996
(73) Proprietor: AFLEX HOSE LIMITED, Brighouse, West Yorkshire HD6 1EJ (GB)
(72) Inventor: Anderson, Roderick Seton, Brighouse HD6 4JL (GB)
(74) Representative: Wharton, Peter Robert

(56) References cited:
- DE-A- 2 521 997
- DE-U- 8 701 562
- FR-A- 1 590 813
- US-A- 3 284 108

## Description

The present invention relates, to a method of securing an end fitting to a flexible hose or pipe, in particular a plastic lined hose, and to an assembly comprising a plastic lined hose having an end fitting secured thereto.

The type of end fitting to which this invention relates primarily, though not exclusively, is that known as "Triclover", "Triclamp" or "clamp type" as defined by British Standard BS 4825 Part 3. This type of end fitting is widely used in Biochemical Process Plants and Laboratories where the ultimate in hygienic operation is required.

Conventionally, an end fitting of this type would be secured to the end of a pipe or hose to provide a means of connection to other pipes and hoses. One way in which this is currently done is to insert an end fitting within the hose end and align it with an identical end fitting, clamping the two components together with a rubber seal located between the sealing faces of the two end fittings. This rubber seal conventionally includes annular "beads" on each face which seat within correspondingly machined grooves in the steel end fittings, these beads providing an aid to concentric location during assembly. This system has the disadvantage that the fitting creates an entrapment zone for fluid passing through the fitting, such as renders hygienic operation impossible.

It is also known to attach such an end fitting to say a fluorocarbon or PTFE plastic lined hose in such a way that the plastic liner is passed through the bore of the fitting, then flared out to form a sealing face, thus ensuring continuity of hygienic fluid flow through the fitting, and to protect the fitting from any corrosive effect the fluid may have on the material from which the fitting itself is made.

However, there is a disadvantage in this second type of procedure in that because it eliminates the rubber seal and hence the "beads", concentric connection of the two end fittings is relatively difficult and also requires a much greater clamping force to form a seal with the fluorocarbon plastic sealing face than would otherwise be required with a softer, more resilient rubber seal. The clamping system used conventionally is not designed to provide such a high clamping force. Also, an entrapment zone is created at the point where the PTFE liner goes around the corner of the end fitting into the flared sealing face. It is therefore the aim of the present invention to overcome these disadvantages by providing a system which is easily aligned concentrically and which can be sealed effectively using conventional clamping techniques. Furthermore, the invention aims to eliminate entrapment zones.

According to a first aspect of the present invention there is provided a method of securing an end fitting to an end of a hose having a plastic liner, the method including the steps of:-
(i) providing a hollow end fitting for a hose, the end fitting having a spigot and a sealing face, recessing said sealing face and forming or enlarging a groove therein,
(ii) inserting the spigot of the end fitting between the hose and the liner and bringing the liner end through said hollow end fitting and flaring out the liner end to form a plastic sealing face,
(iii) processing the assembly so formed in such a manner as to cause the flared liner end to take up the space previously created by recessing the sealing face of the end fitting such that the plastic sealing face thus assumes the shape of the underlying recessed face of the end fitting, including the groove, so as to permit the use of a standard "beaded" rubber seal in subsequent connection of the end fitting to a mating end fitting.

Thus, the end fitting (typically a steel end fitting) applied in accordance with the invention may be located concentrically with a standard conventional end fitting having a similar groove in its sealing face by using a conventional resilient rubber seal having annular beads on each sealing face which are received within the annular grooves in the plastic liner and the sealing face of the conventional end fitting respectively. The two end fittings may then be clamped together to form a sealed connection.

By first taking away or recessing the sealing face of the typically all steel end fitting, the liner is, according to the invention, caused to fill the space such that the plastic lined end fitting, and particularly the sealing face thereof, is the same final size and shape as a conventional grooved typically all steel end fitting.

The processing step also preferably results in the liner assuming a square internal corner where it goes into the flared sealing face, thus avoiding any entrapment zone.

Conveniently, the processing step (iii) recited above is a hot coining process which causes the plastic liner to assume the shape of the metal fitting.

The clamping system used would typically be a clamp ring which presses the two end fittings together.

According to a second aspect of the present invention there is provided a plastic lined hose having secured to an end thereof a hollow end fitting having a spigot and a sealing face, wherein the spigot is located between the hose and the liner, the sealing face of the end fitting is recessed and has a groove therein, and the liner end passes through the end fitting and is flared out to form a plastic sealing face overlying the sealing face of the end fitting thus filling the space provided by the recessing of the end fitting sealing face and the plastic sealing face thus formed assuming the shape of the underlying recessed face of the end fitting, including the groove, so as to permit the use of a standard "beaded" rubber seal in subsequent connection of the end fitting to a mating end fitting.

The combined plastic sealing face and the steel sealing face of the end fitting which it presses against have the same thickness and profile as a standard "Triclover" fitting.

Thus, with the system of the present invention, the advantages of the flared liner end are retained, without the disadvantages of difficult alignment and requirement of high clamping force.

In the preferred embodiment, the plastic liner has a square internal corner which avoids any entrapment zone at the inside edge.

According to a third aspect of the present invention, there is provided an assembly comprising a plastic lined hose having secured to an end thereof a hollow end fitting having a spigot and a sealing face, wherein the spigot is located between the hose and the liner, characterised in that the sealing face of the end fitting is recessed and has a groove therein, and the liner end passes through the end fitting and is flared out to form a plastic sealing face overlying the sealing face of the end fitting thus filling the space provided by the recessing of the end fitting sealing face, the plastic sealing face assuming the shape of the underlying recessed face of the end fitting, including the groove, and being clamped against the sealing face of a mating end fitting using a standard "beaded" rubber seal and a clamp ring.

An embodiment of the present invention will now be described, by way of example only, and contrasted with the prior art, with reference to the accompanying drawings in which:-
Figure 1 illustrates a conventional method of attaching an end fitting to a pipe or hose, shown jointed to a mating fitting,
Figure 2 illustrates a different, conventional method of attaching an end fitting to a plastic lined hose, for ensuring hygienic operation, shown jointed to a mating fitting, and
Figure 3 illustrates the end fitting and method of securing same to a plastic lined hose, in accordance with the present invention, shown jointed to a mating fitting.

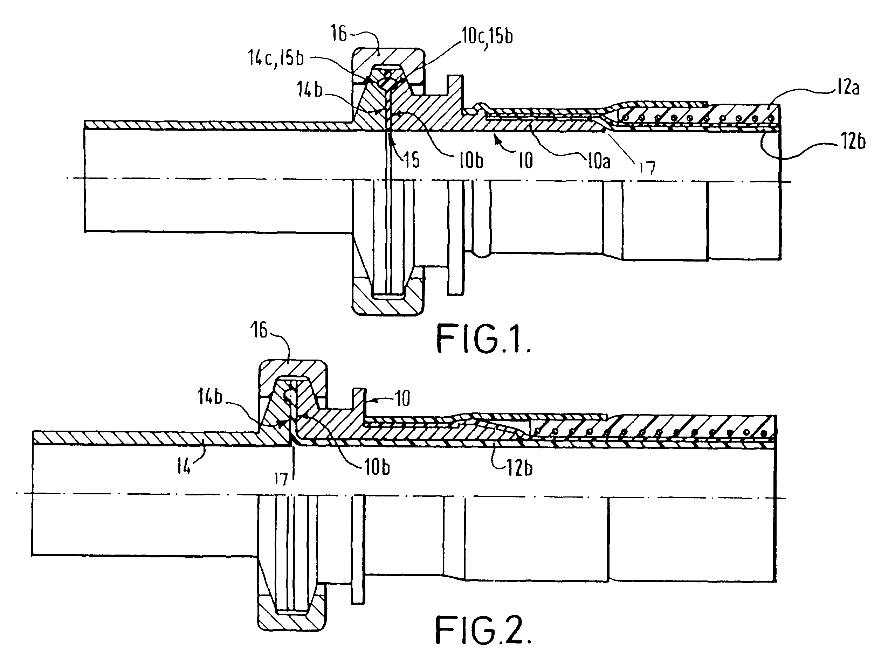

Referring to the drawings, and in particular Figure 1, an end fitting 10 is conventionally applied to the end of a hose 12 (which may comprise an outer layer 12a and inner liner 12b), by inserting the spigot end 10a inside the liner 12b and clamping the end fitting 10 to another end fitting 14 using a clamp-ring 16 to press the two sealing faces 10b, 14b together against a rubber seal 15. The seal 15 has two annular beads 15b extending outwardly from the seal faces, and these beads 15b are received inside grooves 10c, 14c in the respective end fittings, thus acting as a guide to concentric alignment. This arrangement creates an entrapment zone 17 between the liner 12b and the end of the spigot 10a, in which debris will collect.

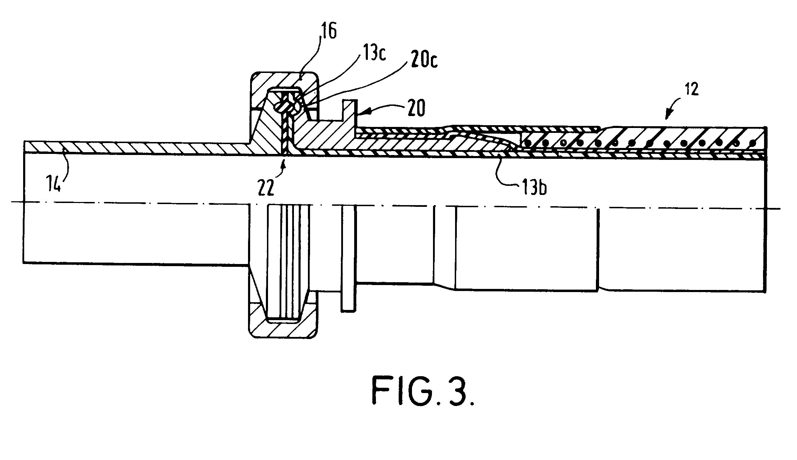

For this reason, the arrangement shown in Figure 2 is preferred, known as a "flared plastic lined end" , where the liner 12b is pulled through the hollow end fitting 10 and flared out to form a seal between the two faces 10b, 14b of the two end fittings, this seal then being clamped again using a clamp ring 16. This avoids the entrapment zone problem, but is difficult to align correctly and to clamp using the conventional clamp ring 16, due to the higher sealing force required. Also, another entrapment zone 17 is created between the liner 12b and the sealing face 14b of the mating end fitting 14.

Thus, as illustrated in Figure 3, the present invention overcomes these difficulties by providing a modified end fitting 20 in which the whole of the sealing face of the end fitting is machined back, and the groove 20c re-formed or enlarged. The flared end of plastic liner 13b is then "hot-coined" to cause it to mould itself into and assume the shape of the underlying recessed face of the end fitting 20, including the groove 20c.
Thus, the face of the end fitting 20 is still lined with plastic as with the prior art embodiment illustrated in Figure 2, but also includes in that lined face a groove 13c formed in the liner 13b to receive the annular bead of a rubber seal 22. Thus, the end fitting 20 according to the present invention can be clamped to a conventional end fitting 14 using a conventional clamp-ring 16 and conventional rubber seal 22, bringing ease of alignment and clamping along with alleviation of problems with regard to entrapment.

## Claims

1. A method of securing an end fitting (20) to an end of a hose (12) having a plastic liner (13b), the method including the steps of:-
(i) providing a hollow end fitting (20) for a hose, the end fitting having a spigot and a sealing face, recessing said sealing face and forming or enlarging a groove (20c) therein,
(ii) inserting the spigot of the end fitting between the hose (12) and the liner (13b) and bringing the liner end through said hollow end fitting and flaring out the liner end to form a plastic sealing face,
(iii) processing the assembly so formed in such a manner as to cause the flared liner end to take up the space previously created by recessing the sealing face of the end fitting such that the plastic sealing face assumes the shape of the underlying recessed face of the end fitting, including the groove, so as to permit the use of a standard "beaded" rubber seal (22) in subsequent connection of the end fitting (20) to a mating end fitting (14).

2. A method according to Claim 1, further characterised in that the processing step also preferably results in the liner (13b) assuming a square internal corner where it goes into the flared sealing face, thus avoiding any entrapment zone.

3. A method according to Claim 1 or Claim 2, further characterised in that the processing step (iii) is a hot coining process which causes the plastic liner to assume the shape of the metal fitting (20).

4. A plastic lined hose (12, 13b) having secured to an end thereof a hollow end fitting (20) having a spigot and a sealing face, wherein the spigot is located between the hose and the liner, characterised in that the sealing face of the end fitting is recessed and has a groove (20c) therein, and the liner end passes through the end fitting and is flared out to form a plastic sealing face overlying the sealing face of the end fitting thus filling the space provided by the recessing of the end fitting sealing face and the plastic sealing face thus formed assuming the shape of the underlying recessed face of the end fitting, including the groove, so as to permit the use of a standard "beaded" rubber seal (22) in subsequent connection of the end fitting (20) to a mating end fitting (14).

5. A plastic lined hose according to Claim 4, further characterised in that the plastic liner (13b) has a square internal corner which avoids any entrapment zone at the inside edge.

6. An assembly comprising a plastic lined hose (12, 13b) having secured to an end thereof a hollow end fitting (20) having a spigot and a sealing face, wherein the spigot is located between the hose and the liner, characterised in that the sealing face of the end fitting is recessed and has a groove (20c) therein, and the liner end passes through the end fitting and is flared out to form a plastic sealing face overlying the sealing face of the end fitting thus filling the space provided by the recessing of the end fitting sealing face, the plastic sealing face assuming the shape of the underlying recessed face of the end fitting, including the groove, and being clamped against the sealing face of a mating end fitting (14) using a standard "beaded" rubber seal (22) and a clamp ring (16).

## Patentansprüche

1. Verfahren zum Befestigen eines Endanschlußstücks (20) an einem Ende eines Schlauches (12), der eine Kunststoffeinlage (13b) hat, wobei das Verfahren die folgenden Schritte aufweist:
(i) es wird ein hohles Endanschlußstück (20) für einen Schlauch bereitgestellt, wobei das Endanschlußstück einen Stutzen und eine Dichtfläche hat, die Dichtfläche wird mit einer Aussparung versehen und darin wird eine Nut (20c) gebildet oder vergrößert,
(ii) der Stutzen des Endanschlußstücks wird zwischen den Schlauch (12) und die Einlage (13b) eingesetzt und das Einlagenende wird durch das hohle Endanschlußstück eingebracht und das Einlagenende wird nach außen erweitert, um eine Kunststoffdichtfläche zu bilden,
(iii) die so gebildete Anordnung wird derart bearbeitet, daß das erweiterte Einlagenende dazu veranlaßt wird, den Raum einzunehmen, der vorher durch das Aussparen der Dichtfläche des Endanschlußstücks geschaffen worden ist, so daß die Kunststoffdichtfläche die Gestalt der darunterliegenden ausgesparten Fläche des Endanschlußstücks einschließlich der Nut annimmt, um den Gebrauch einer Standard-"Wulst"-Gummidichtung (22) bei der anschließenden Verbindung des Endanschlußstücks (20) mit einem dazu passenden Endanschlußstück (14) zu ermöglichen.

2. Verfahren nach Anspruch 1,
dadurch gekennzeichnet,
daß der Bearbeitungsschritt außerdem bevorzugt dazu führt, daß die Einlage (13b) dort, wo sie in die erweiterte Dichtfläche hineingeht, eine rechteckige innere Ecke einnimmt, so daß jegliche Einfangzone vermieden wird.

3. Verfahren nach Anspruch 1 oder Anspruch 2,
dadurch gekennzeichnet, daß der Bearbeitungsschritt (iii) ein Warmprägevorgang ist, der die Kunststoffeinlage dazu veranlaßt, die Gestalt des Metallanschlußstücks (20) anzunehmen.

4. Schlauch (12, 13b) mit Kunststoffeinlage, an dessen einem Ende ein hohles Endanschlußstück (20), das einen Stutzen und eine Dichtfläche hat, befestigt ist, wobei der Stutzen zwischen dem Schlauch und der Einlage angeordnet ist,
dadurch gekennzeichnet,
daß die Dichtfläche des Endanschlußstücks mit einer Aussparung versehen ist und eine Nut (20c) darin hat und daß das Einlagenende durch den Endanschluß hindurchgeht und nach außen erweitert ist, um eine Kunststoffdichtfläche zu bilden, die über der Dichtfläche des Endanschlußstücks liegt und somit den Raum ausfüllt, der durch die Aussparung der Dichtfläche des Endanschlußstücks gebildet ist,
wobei die so gebildete Kunststoffdichtfläche die Gestalt der darunterliegenden ausgesparten Fläche des Endanschlußstücks einschließlich der Nut annimmt, um den Gebrauch einer Standard-"Wulst"-Gummidichtung (22) bei der anschließenden Verbindung des Endanschlußstücks (20) mit einem dazu passenden Endanschlußstück (14) zu ermöglichen.

5. Schlauch mit Kunststoffeinlage nach Anspruch 4,
dadurch gekennzeichnet,
daß die Kunststoffeinlage (13b) eine rechteckige innere Ecke hat, was jegliche Einfangzone am Innenrand vermeidet.

6. Anordnung, die einen Schlauch (12, 13b) mit einer Kunststoffeinlage aufweist, an dessen einem Ende ein hohles Endanschlußstück (20) befestigt ist, das einen Stutzen und eine Dichtfläche hat, wobei der Stutzen zwischen dem Schlauch und der Einlage angeordnet ist,
dadurch gekennzeichnet,
daß die Dichtfläche des Endanschlußstücks mit einer Aussparung versehen ist und eine Nut (20c) darin hat und daß das Einlagenende durch das Endanschlußstück hindurchgeht und nach außen erweitert ist, um eine Kunststoffdichtfläche zu bilden, die über der Dichtfläche des Endanschlußstücks liegt und somit den Raum ausfüllt, der durch die Aussparung der Dichtfläche des Endanschlußstücks gebildet ist, wobei die Kunststoffdichtfläche die Gestalt der darunterliegenden ausgesparten Fläche des Endanschlußstücks einschließlich der Nut annimmt und unter Verwendung einer Standard"Wulst"-Gummidichtung (22) und eines Klemmrings (16) gegen die Dichtfläche eines dazu passenden Endanschlußstücks (14) geklemmt ist.

## Revendications

1. Procédé de fixation d'un embout (20) à une extrémité d'un tuyau (12) présentant un revêtement en matière plastique (13b), le procédé consistant à :
(i) réaliser un embout creux (20) pour un tuyau, l'embout présentant un manchon et une surface d'étanchéité, creuser ladite surface d'étanchéité et former ou agrandir une rainure (20c) à l'intérieur,
(ii) insérer le manchon de l'embout entre le tuyau (12) et le revêtement (13b), et faire passer l'extrémité du revêtement à travers l'embout creux et courber l'extrémité du revêtement pour former une surface d'étanchéité en matière plastique,
(iii) traiter l'assemblage ainsi réalisé de telle sorte que l'extrémité du revêtement recourbé occupe l'espace auparavant créé en creusant la surface d'étanchéité de l'embout afin que la surface d'étanchéité en matière plastique épouse la forme de la surface creusée sous-jacente de l'embout, y compris la rainure, de manière à permettre l'utilisation d'un joint en caoutchouc « nervuré » standard (22) selon une relation de raccordement ultérieure entre l'embout (20) et un embout correspondant (14).

2. Procédé selon la revendication 1, caractérisé en outre en ce que l'étape de traitement résulte également, de préférence, en ce que le revêtement (13b) épouse la forme d'un coin intérieur carré où il rentre dans la surface d'étanchéité évasée, ce qui permet d'éviter toute zone d'inclusion.

3. Procédé selon la revendication 1 ou 2, caractérisé en outre en ce que l'étape de traitement (iii) est un procédé de matriçage à chaud qui fait prendre au revêtement plastique la forme du raccord métallique (20).

4. Tuyau revêtu de plastique (12, 13b) ayant un embout creux (20) fixé à une de ses extrémités, lequel embout creux présente un manchon et une surface d'étanchéité, dans lequel le manchon est situé entre le tuyau et le revêtement, caractérisé en ce que la surface d'étanchéité de l'embout est creusée et présente une rainure (20c) à l'intérieur, et l'extrémité du revêtement passe à travers l'embout et est recourbée pour former une face d'étanchéité en matière plastique recouvrant la surface d'étanchéité de l'embout, ce qui remplit l'espace procuré par le creusement de la surface d'étanchéité de l'embout et la surface d'étanchéité en matière plastique ainsi formée épousant la forme de la surface creusée sous-jacente de l'embout, y compris la rainure, de manière à permettre l'utilisation d'un joint en caoutchouc (22) « nervuré » standard selon une relation de raccordement ultérieur entre l'embout (20) et un embout correspondant (14).

5. Tuyau revêtu de matière plastique selon la revendication 4, caractérisé en outre en ce que le revêtement en matière plastique (13b) présente un coin intérieur carré qui évite toute zone d'inclusion au niveau du bord intérieur.

6. Assemblage comprenant un tuyau revêtu de plastique (12, 13b) dont un embout creux (20) est fixé à une de ses extrémités, lequel embout (20) présente un manchon et une surface d'étanchéité, dans lequel le manchon est situé entre le tuyau et le revêtement, caractérisé en ce que la surface d'étanchéité de l'embout est creusée et présente une rainure (20c) à l'intérieur, et l'extrémité du revêtement passe à travers l'embout et est recourbée pour former une surface d'étanchéité en matière plastique recouvrant la surface d'étanchéité de l'embout, remplissant ainsi l'espace procuré par le creusement de la surface d'étanchéité de l'embout, la surface d'étanchéité en matière plastique épousant la forme de la surface creusée sous-jacente de l'embout, y compris la rainure, et étant serrée contre la surface d'étanchéité d'un embout correspondant (14) en utilisant un joint en caoutchouc (22) « nervuré » standard et une bague de serrage (16).
